# EUROPÄISCHE PATENTSCHRIFT

(11) **EP 1 184 471 B1**
(45) Veröffentlichungstag und Bekanntmachung des Hinweises auf die Patenterteilung: **08.08.2007**
(21) Anmeldenummer: 01115067.9
(22) Anmeldetag: 21.06.2001
(51) Int. Cl.: C22C 9/01, C22C 9/04, C22C 9/05, G02C 5/02, A44C 27/00

(54) **Legierung, insbesondere Draht für Brillengestelle**
Alloy, particularly wire for spectacles frame
Alliage, en particulier fil pour monture de lunettes

(30) Priorität: 02.09.2000 DE 10043278
(43) Veröffentlichungstag der Anmeldung: 06.03.2002
(73) Patentinhaber: Berkenhoff GmbH, 35452 Heuchelheim (DE)
(72) Erfinder: Tauber, Klaus, 35444 Biebertal (DE); Schütz, Jürgen, 35630 Ehringshausen (DE); Schmid, Eberhard, Dr., 63755 Alzenau i. UF (DE); Dietrich, Bernd, 35745 Herborn-Merkenbach (DE)
(74) Vertreter: Böck, Bernhard

(56) Entgegenhaltungen:
- EP-A- 0 814 170
- EP-A- 0 911 419
- DE-A- 4 131 426
- DE-A- 19 624 732
- DE-C- 744 319
- DE-C- 919 738
- PATENT ABSTRACTS OF JAPAN vol. 1997, no. 12, 25. Dezember 1997 (1997-12-25) -& JP 09 202931 A (FUJII SEISAKUSHO:KK;MIYOSHI GOKIN KOGYO KK), 5. August 1997 (1997-08-05)

## Beschreibung

Die Erfindung betrifft eine Legierung, insbesondere einen Draht für Brillengestelle, Schmuckwaren und andere am Körper zu tragende bzw. an Kleidungsstücken angebrachte und körperberührende Metallteile.

Aus der DE 41 31 426 A1 ist eine derartige Legierung bekannt. Der Nachteil der in dieser Offenlegungsschrift bekannten Legierung ist es jedoch, dass die Legierung nach dem Löten, z.B. dem Löten von Brillengestellen ihre Härte verliert und somit nicht mehr die optimale Härte für den Alltagsgebrauch der Brille aufweist. Aus der DE 196 24 732 A1 ist ferner eine Legierung bekannt, welche den Nachteil einer eingeschränkten Verformbarkeit hat. Wird die Legierung über einen gewissen Prozentsatz hinaus verformt, bricht die Legierung, was insbesondere bei Brillen die Einsatzfähigkeit einschränkt.

Der Erfindung liegt daher die Aufgabe zu Grunde, eine Legierung vorzuschlagen, welche auch nach einem Lötvorgang die erforderliche Härte behält und zudem besser verformbar als die bisher bekannten Legierungen ist.

Diese Aufgabe wird erfindungsgemäß dadurch gelöst, dass die Legierung aus der folgenden Zusammensetzung (in Gew.-%) besteht: Zn 3 - 7 %, Mn 2 - 5 %, Al 2 - 6 %, Fe 0,8 - 3 %, Si 0,3 - 0,8 %, und einem Rest Cu.

Ein vorteilhaftes Ausführungsbeispiel der Legierung weist 4,5 - 5,0 % Zn, 4,5 - 5,0 % Mn, 5,0 - 5,5 % Al, 1,7 - 2,0 % Fe, 0,3 - 0,5 % Si und als Rest Cu auf.

Aus einer derartigen Legierung können Brillengestelle, Schmuckwaren und Metallteile für Kleidungsstücke hergestellt werden. Ferner können aus der Legierung Zwischenprodukte oder Formmaterialien, insbesondere Draht-, Band- oder Stangenmaterial hergestellt werden.

Anhand der Zeichnung werden die erfindungsgemäßen Vorteile der Legierung näher erläutert. Darin zeigt
Fig. 1 ein Härte-Verformungs-Diagramm und
Fig. 2 ein Härte-Temperatur-Diagramm,
jeweils von der erfindungsgemäßen Legierung und von zwei aus dem Stand der Technik bekannten Legierungen.

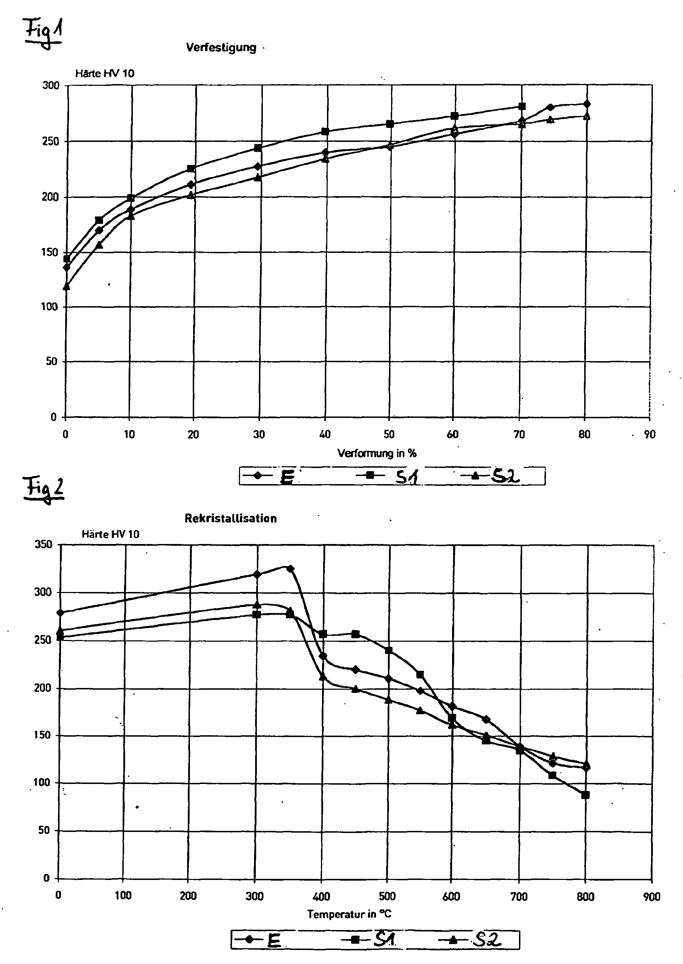

In den Figuren 1 und 2 ist der Härteverlauf des erfindungsgemäßen Drahtes mit E bezeichnet, während die Beispiele aus dem Stand der Technik mit S1 und S2 bezeichnet sind. In Fig. 1 lässt sich der Vorteil der erfindungsgemäßen Legierung zu einer Legierung aus dem Stand der Technik erkennen. Zwar hat die Legierung S1 in einem Verformungsbereich von 0 - 70 % eine höhere Härte als die erfindungsgemäße Legierung E, jedoch bricht diese Legierung ab einer Verformung von ca. 70 %. Die Härte der zweiten aus dem Stand der Technik bekannten Legierung S2 liegt durchweg unter dem Wert der erfindungsgemäßen Legierung E. Insbesondere in einem Verformungsbereich von 70 - 80 % lässt sich eine deutlich höhere Härte der erfindungsgemäßen Legierung E gegenüber der Legierung S2 erkennen.

Augenfälliger als der vorgenannte Vorteil ist jedoch der Vorteil, den die erfindungsgemäße Legierung bei einer Erwärmung aufweist, wie sie beispielsweise beim Löten auftritt. Die Härte der erfindungsgemäßen Legierung E liegt in einem Temperaturbereich von 0 - 350° C deutlich über den Härten der aus dem Stand der Technik bekannten Legierungen S1 und S2. Eine erfindungsgemäße Legierung behält also auch nach einem Lötvorgang die erforderliche Härte.

## Patentansprüche

1. Legierung, insbesondere für Brillengestelle, für Schmuckwaren und für andere am Körper zu tragende bzw. an Kleidungsstücken angebrachte und körperberührende Metallteile, wobei
die Legierung aus der folgenden Zusammensetzung (in Gew.-%) besteht:
| | |
|---|---|
| Zn | 3 - 7 % |
| Mn | 2 - 5 % |
| Al | 2 - 6% |
| Fe | 0,8 - 3 % |
| Si | 0,3 - 0,8 % |
| Cu | Rest. |

2. Legierung nach Anspruch 1, wobei die Legierung folgende Zusammensetzung (in Gew.-%) aufweist:
| | |
|---|---|
| Zn | 4,5 - 5,0 % |
| Mn | 4,5 - 5,0 % |
| Al | 5,0 - 5,5 % |
| Fe | 1,7 - 2,0 % |
| Si | 0,3 - 0,5 % |
| Cu | Rest. |

3. Brillengestell, hergestellt unter Verwendung einer Legierung nach Anspruch 1 oder 2.

4. Schmuckwaren, hergestellt unter Verwendung einer Legierung nach Anspruch 1 oder 2.

5. Metallteile für Kleidungsstücke, hergestellt unter Verwendung einer Legierung nach Anspruch 1 oder 2.

6. Zwischenprodukt oder Vormaterial, insbesondere Draht-, Band- oder Stangenmaterial, hergestellt unter Verwendung einer Legierung nach Anspruch 1 oder 2.

## Claims

1. An alloy, in particular for spectacle frames, for jewellery and for other metal parts which are to be worn on the body or which are attached to articles of clothing and are in contact with the body, the alloy being made up of the following composition (in percent by weight):
| | |
|---|---|
| Zn | 3 - 7% |
| Mn | 2 - 5 % |
| A1 | 2 - 6 % |
| Fe | 0.8 - 3 % |
| Si | 0.3 - 0.8 % |
| Cu | remainder. |

2. An alloy according to claim 1, the alloy having the following composition (in percent by weight):
| | |
|---|---|
| Zn | 4.5 - 5.0 % |
| Mn | 4.5 - 5.0 % |
| A1 | 5.0 - 5.5 % |
| Fe | 1.7 - 2.0 % |
| Si | 0.3 - 0.5 % |
| Cu | remainder. |

3. A spectacle frame, manufactured using an alloy according to claim 1 or 2.

4. Jewellery, manufactured using an alloy according to claim 1 or 2.

5. Metal parts for articles of clothing, manufactured using an alloy according to claim 1 or 2.

6. An intermediate product or initial product, in particular wire material, strip material or bar material, manufactured using an alloy according to claim 1 or 2.

## Revendications

1. Alliage, en particulier pour monture de lunettes, pour bijoux et pour d'autres pièces métalliques à porter sur le corps et respectivement, appliquées sur des pièces de vêtements et en contact avec le corps, où l'alliage consiste en la composition suivante (en % en poids) :
| | |
|---|---|
| Zn | 3 - 7% |
| Mn | 2 - 5% |
| Al | 2 - 6% |
| Fe | 0,8 - 3% |
| Si | 0,3 - 0,8% |
| Cu | reste. |

2. Alliage selon la revendication 1, où l'alliage présente la composition suivante (en % en poids) :
| | |
|---|---|
| Zn | 4,5 - 5,0% |
| Mn | 4,5 - 5,0% |
| Al | 5,0 - 5,5% |
| Fe | 1,7 - 2,0% |
| Si | 0,3 - 0,5% |
| Cu | reste. |

3. Monture de lunettes, réalisée en utilisant un alliage selon la revendication 1 ou 2.

4. Bijou, réalisé en utilisant un alliage selon la revendication 1 ou 2.

5. Pièce métallique pour pièce de vêtement, réalisée en utilisant un alliage selon la revendication 1 ou 2.

6. Produit intermédiaire ou produit de départ, en particulier matériau de type fil, bande ou barre, réalisé en utilisant un alliage selon la revendication 1 ou 2.
